# EUROPEAN PATENT APPLICATION

(11) **EP 1 600 788 A1**
(43) Date of publication of application: **30.11.2005**
(21) Application number: 05251438.7
(22) Date of filing: 09.03.2005
(51) Int. Cl.: G01S 1/00

(54) **System and method for detection of signal tampering**

(30) Priority: 17.05.2004 US 847055
(71) Applicant: Agilent Technologies, Inc., Palo Alto, CA 94306 (US)
(72) Inventor: Engel, Glenn R., Snohomish, WA 98290 (US); Cutler, Robert T., Everett, WA 98203 (US)
(74) Representative: Exell, Jonathan Mark

(57) **Abstract**

A system and method is arranged to capture data from existing consumer deployed signal detecting equipment. The gathered data, for example, is used to monitor the position of certain of the consumer devices. By comparing newly-arrived positioning data from each device against the "known" previous position of these devices, an unexplained (or unanticipated) position change yields an early warning that tampering may have occurred within the monitored area. In one embodiment, the devices could be cell phones with built-in GPS signal processing equipment. These cell phones could be pre-positioned around an area and could communicate, either over publicly available communication bands, or over data paths, such as the internet or e-mail.

## Description

### TECHNICAL FIELD

This invention relates to signal tampering detection and more particularly to systems and methods for easily deploying a network for signal tampering detection.

### BACKGROUND OF THE INVENTION

Recent world events have made it necessary to secure signal transmission facilities from unauthorized tampering or interference caused by unknown sources. For example, certain signals (such as Glopal Positioning System (GPS) signals) are used for navigational purposes. These signals are often used as an aid in allowing aircraft to locate proper landing areas. In poor weather, or in unfamiliar surroundings, these navigational signals can be critically important. Not only do these signals yield positioning data for aircraft but they also can be used, perhaps in combination with other signals, for proper altitude control. Thus, even a slight "adjustment" of a navigation signal such as by tampering with the signal (or with components of the signal) or by atmospheric or other interference factors (such as trees, weather, etc.) could yield disastrous results.

Thus, a person, or persons, bent on destruction could, for example, modify (or add other false signals to) one or more such navigational signals, thereby causing loss of life and property. If such modifications are made at a time just prior to the arrival of an aircraft, the unsuspecting aircraft could use the "bad" data without warning.

The combination of a large number of facilities that could be targeted from time to time with a correspondingly large number of aircraft susceptible to data manipulation yields a potentially large area for concern. In addition, while the examples discussed concern aircraft and GPS systems, the same factors hold true for any system which relies on signal emitters for control purposes.

### BRIEF SUMMARY OF THE INVENTION

A system and method is arranged to capture data from existing consumer deployed signal detecting equipment. The gathered data, for example, is used to monitor the position of certain of the consumer devices. By comparing newly-arrived positioning data from each device against the "known" previous position of these devices, an unexplained (or unanticipated) position change yields an early warning that tampering may have occurred within the monitored area.

In one embodiment, the devices could be cell phones with built-in GPS signal processing equipment. These cell phones could be pre-positioned in known locations around an area to be protected and could communicate, either over publicly available communication bands, or over data paths, such as the internet or e-mail. Messages from these devices could, for example, be addressed directly to a flight entering a certain protected space, or could be directed to a control center. In one embodiment, the messages would contain base-line data pertaining to the determined geographical position of each device. When the actual known physical location of a device varies from the position newly calculated from the incoming signals, an early warning is provided that the signals may have been tampered with and are thus unreliable as a single-source navigation aide.

In one embodiment, the system and method could be used to continuously gather positioning information, as obtained from any number of devices, such as cell phones, moving within a specific area. This gathered data (which may or may not be gathered continuously from the same devices) is then statistically combined to provide an early warning when the calculated positions of the monitored devices change in an unpredicted manner.

The foregoing has outlined rather broadly the features and technical advantages of the present invention in order that the detailed description of the invention that follows may be better understood. Additional features and advantages of the invention will be described hereinafter which form the subject of the claims of the invention. It should be appreciated that the conception and specific embodiment disclosed may be readily utilized as a basis for modifying or designing other structures for carrying out the same purposes of the present invention. It should also be realized that such equivalent constructions do not depart from the invention as set forth in the appended claims. The novel features which are believed to be characteristic of the invention, both as to its organization and method of operation, together with further objects and advantages will be better understood from the following description when considered in connection with the accompanying figures. It is to be expressly understood, however, that each of the figures is provided for the purpose of illustration and description only and is not intended as a definition of the limits of the present invention.

### BRIEF DESCRIPTION OF THE DRAWINGS

FIGURES 1A and 1B show one embodiment of a system utilizing portable GPS devices;

FIGURE 2 shows one embodiment of a flow chart for obtaining GPS baseline data;

FIGURES 3A and 3B show embodiments of flow charts for obtaining GPS baseline data for moving devices; and

FIGURE 4 shows one embodiment of a flow chart showing an alerting system when a GPS determined position varies from an expected position.

### DETAILED DESCRIPTION OF THE INVENTION

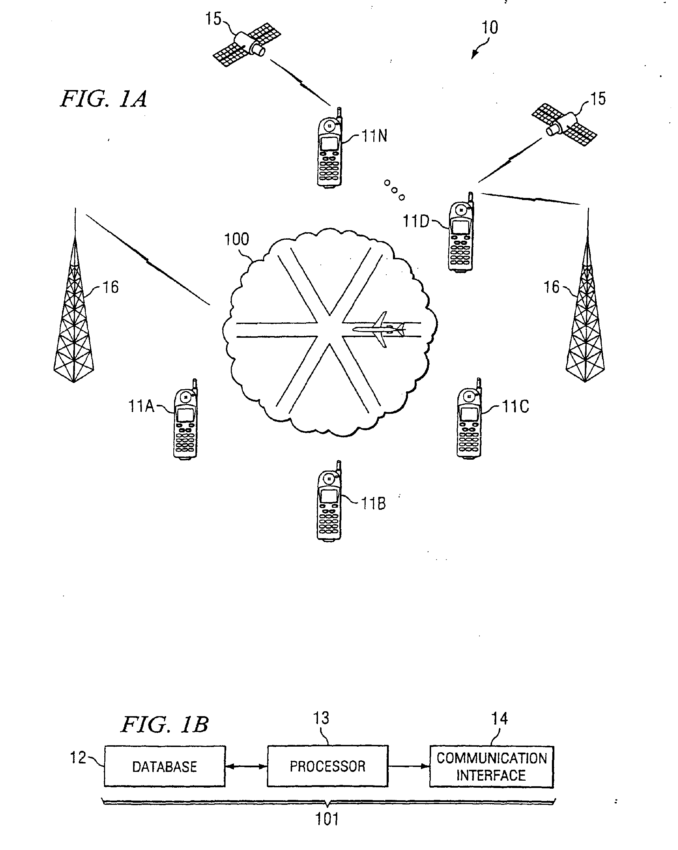

Turning now to FIGURES 1A and 1B, there is shown system 10 which is one embodiment of a system utilizing GPS devices to protect a zone, such as airport 100, where positioning data is used by aircraft. The positioning data is derived from satellites 15, and/or tower 16. A plurality of mobile devices 11A-11N are positioned in fixed known locations around area 100. These devices can be, for example, consumer cell phones which include therein GPS receivers which accept signals from one or more satellites 15 and/or towers 16. Each device calculates its own position based upon receipt of the RF signals. Thus, for example, device 11A would obtain signals from satellites 15 and/or tower 16 and will then calculate a position for device 11A. This position is then transmitted to communication interface 14 of control system 101 and stored in database 12 under control of processor 13.

The positions from all the other devices 11B, 11C, 11D to 11N are also similarly stored. In a situation where these devices are in stationary locations, the location information for each device should not change from time to time. Thus, if on a subsequent reading from anyone of the devices that device appears to be at a different position (latitude, longitude, and/or altitude change) then an indication is sent under control of processor 13 and communication interface 14 to a particular address, or addresses, or to a command center, as desired. This communication can be wireline, wireless, internet, etc. The specific address(s) can be, for example, a specific aircraft about to land at airport 100.

In the situation, as will be discussed hereinafter, where devices 11A through 11N are mobile, their position (but not necessarily their altitude) would be expected to change from reading to reading. Thus, it is necessary to calculate a next "expected" position for each device. This is accomplished under control of processor 13. In some situations, it may not be pre- known which devices 11A-11N are in proximily to area 100 and in such situations a statistical calculation is made from those devices determined to be within area 100. From the statistical analysis of these readings a determination is made as to the next anticipated position for a given device. Thus, when the statistical readings change such that the next actual reading is different from the calculated anticipated reading, an error message is sent. When calculating statistical "next" locations, any desired statistical system could be used, including weighted averages of last positions.

In the embodiment discussed with respect to FIGURE 1, devices 11A-11N report their position (or other data) to processor 101. This requires bandwidth. In an alternate embodiment, replica of system 101 can reside in one or all devices 11A-11N such that those devices each can make the decision that a new reading is within an acceptable range and thus the new reading does not represent an event of interest. In most situations this is preferable to having each device report it's location to a server which then makes the decision.

Similarly, each device can 'self calibrate' at turn-on to its new location and use that self-calibration as a reference. In most cases it will still be advantageous for the devices to 'check in' to a server periodically to assure the server that they have not gone 'offline' due to tampering or malfunction. The frequency of these health reports can be significantly less than the number of GPS readings. Using the processing capability of each device reduces the probability of choking the system with 'no change' messages and reserves bandwidth for the more important 'something changed' messages.

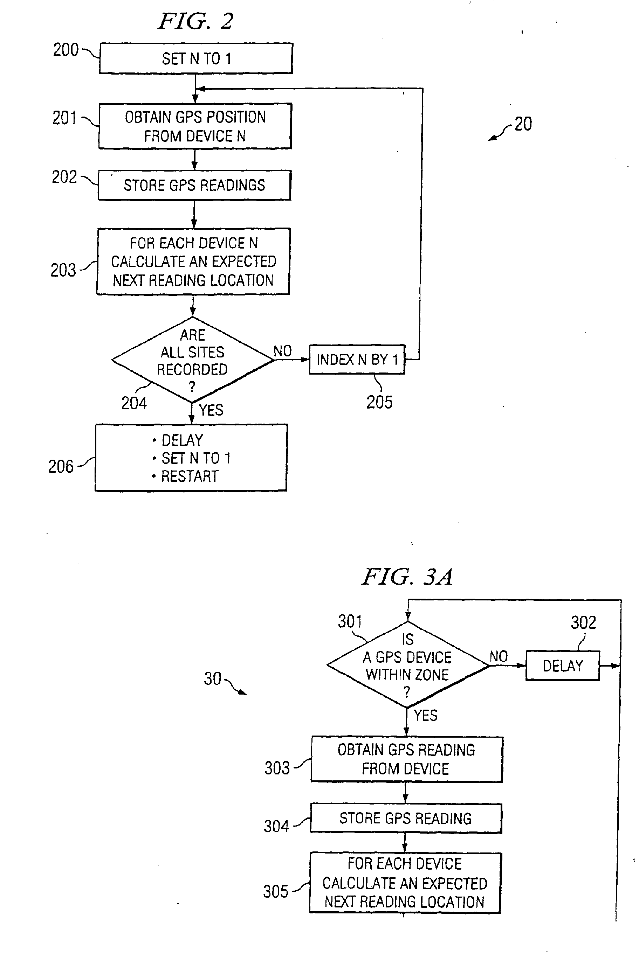

FIGURE 2 shows one embodiment 20 of a flow chart for obtaining baseline data. Thus, in process 200, N is set to 1 with N being the device number. In our example of FIGURE 1, N=1 would be device 11A. Process 201 obtains the GPS position from device 11A and process 202 stores the obtained GPS position in the database. Process 203 then calculates for each device an expected next location reading for that device. Thus, if this device is stationery, the next reading would be predicted to be exactly the same latitude, longitude and/or altitude as the previous reading. Note that while latitude, longitude and altitude are being discussed, any positioning scheme can be used. Also note that the raw data can be stored and used instead of the calculated position.

Process 204 determines if all sites have been recorded. If the answer is no, then process 205 index N by 1 and process 201, 202, 203 and 204 are repeated. When all sites have been recorded, process 206 then pauses for a certain delay. N is reset to 1 and the process is restarted so that readings are again taken from all of the sites.

FIGURE 3A shows one embodiment 30 where the GPS devices (cell phones, etc.) are moving within an area. In process 301 a determination is made as to whether a particular GPS device is within a zone (for example, within area 100, FIGURE 1). This determination can be made by reading information from various devices as to their locations and having a pre-mapped zone of locations within which data is maintained. If a given device is not within the zone, delay process 302 restarts process 301 after an interval.

When a device is within the zone, a GPS reading is obtained from the device via process 303. This GPS reading is stored via process 304 and process 305 calculates the expected next location based upon either statistical analysis or the actual location of the device.

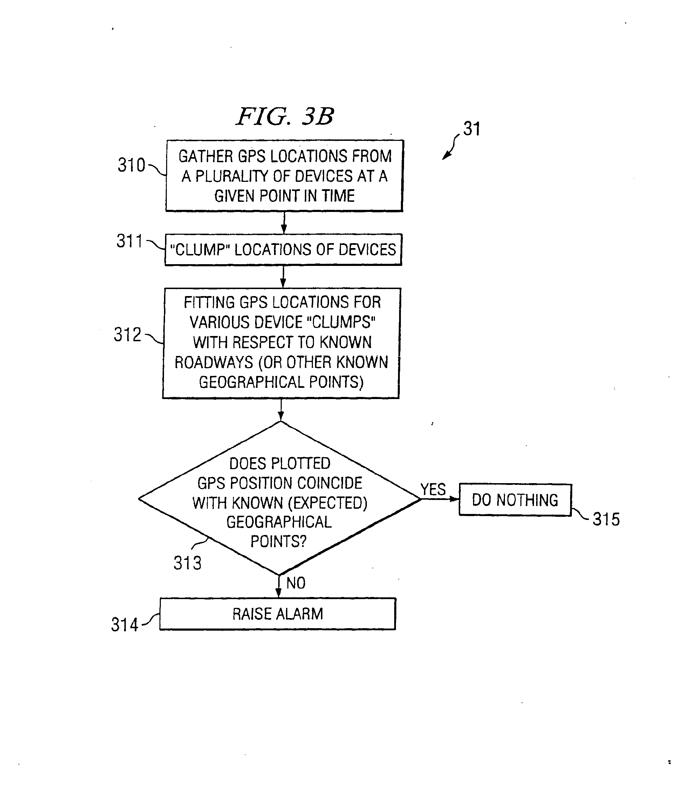

FIGURE 3B shows an alternative for determining GPS errors from mobile devices by collecting the GPS locations from a number of devices at a specific point in time, as shown in process 310, while ignoring net migrations due to traffic flow. With a larger number of devices, the expectation is that they would not all move in the same net direction at the same time and thus the calculus of their GPS positions will be constant. It is not usual to experience large, sudden shifts in signal quality as averaged over a large population, over any one geographic region. Thus, it can be assumed that signal quality will remain constant. Process 311 then breaks down all of GPS readings into "clumps" (or a single clump) of readings clustered around particular landmarks, such as roadways, tourist attractions, etc. It is then possible to deduce for each "clump" of devices a most probable landmark (such as a highway) that a set of signals is coming from. Thus, it is possible, via process 312 to fit a path (or a particular location) to the data representing the most probable landmark of the devices, even though the devices are moving. If, for example, the focus of device locations is spread out in a line (straight or curved) it is reasonable to conclude that the landmark is a roadway and the GPS locations are coming from vehicles along the roadway. The "determined" location of the roadway is then compared to the known location of the roadway via process 313. Error messages, via process 314 are generated when a mismatch occurs.

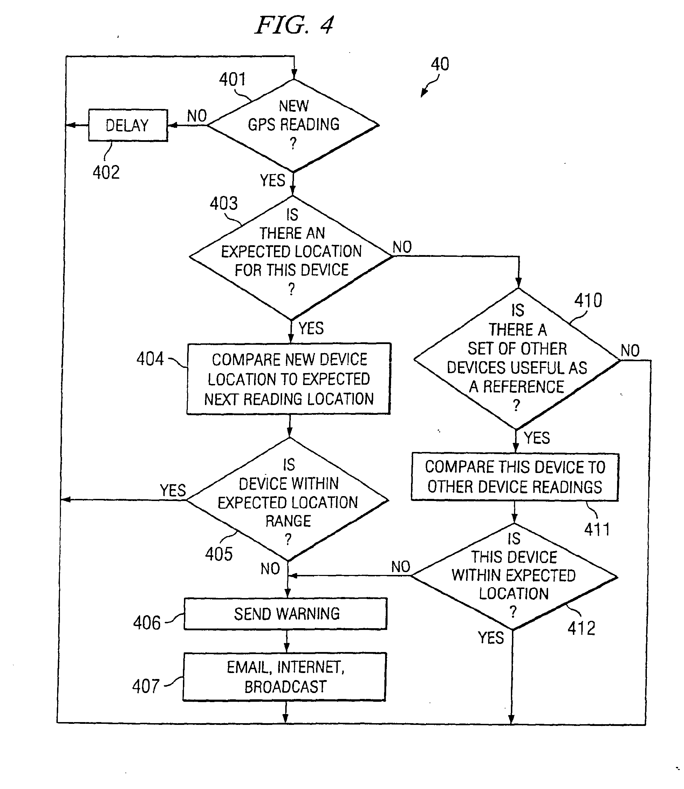

FIGURE 4 shows one embodiment 40 for processing location information. Process 401 determines if a new GPS reading has been obtained. If not, a delay is established via process 402 and the system restarts. When a new GPS reading has been obtained, process 403 determines if there is an expected location for this device. If there is no expected location, process 410 determines if there is a set of other devices that could be used for a reference. This would be, for example, a statistical determination within the area. If the answer is yes, then a comparison is made via process 411 to compare this reading against expected readings within this area. If the new reading is not within an expected location, then a warning is sent via process 406. This warning can be sent if one location is "wrong" or only if a number of locations come up "wrong". Normally, any deviation of a fixed location should be set to trigger a fault condition.

Returning to process 403, if there is an expected location for this device, then process 404 compares the new location against the "expected" location to see if the locations match, i.e. whether the newly obtained GPS reading matches the previous (or expected) reading. Process 405 determines whether the locations match by being within the expected range of locations. Note that "match" in this context may mean not the exact same location, but an expected location or range of expected locations. If not, processes 406 and 407 control the sending of warnings, as discussed above.

Although the present invention and its advantages have been described in detail, it should be understood that various changes, substitutions and alterations can be made herein without departing from the invention as defined by the appended claims. For example, while the GPS device discussed above is associated with a consumer device, such as a cell phone, other devices could be used. Such devices could be, for example, mobile devices in use by consumers or located in public conveyances such as buses, trucks, etc. The system would utilize the natural brownian motion of these detectors along with constraints, such as the fact that the vehicle must be on a road when going 30mph or more and the vehicle should not be in 'restricted' areas. Data could be harvested from applications within the devices or from telecom existing infrastructure. For example, location enabled cell phones (such as those used for E911) and location enabled cars which may or may not use GPS. Cell phones have the ability to send SMS messages or Internet traffic data while there are already several types of car monitoring systems that utilize GPs or cell phone or satellite communication for fleet management, stolen vehicle retrieval, or car door unlocking.

Moreover, the scope of the present application is not intended to be limited to the particular embodiments of the process, machine, manufacture, composition of matter, means, methods and steps described in the specification. As one will readily appreciate from the disclosure, processes, machines, manufacture, compositions of matter, means, methods, or steps, presently existing or later to be developed that perform substantially the same function or achieve substantially the same result as the corresponding embodiments described herein may be utilized. Accordingly, the appended claims are intended to include within their scope such processes, machines, manufacture, compositions of matter, means, methods, or steps.

## Claims

1. A method for detection of signal tampering, said method comprising:
obtaining, from a plurality of signal detection devices (11), a base-line of signal readouts, said signal detection devices being consumer devices (11) useable for at least one purpose other than said obtaining of said base-line signal readout; and
determining, based upon said obtained base-line signal readout, that a particular signal has been artificially modified.

2. The method of claim 1 wherein said signal detection devices (11) are dual function devices with one function operating on publicly available telecommunication bands.

3. The method of claim 2 wherein one of said dual functions is a GPS function and wherein said base-line of signal readout includes GPS positioning data.

4. The method of claim 1 wherein said base-line of signal readout includes positioning data from each said signal detection device pertaining to the location of said signal detection device.

5. The method of claim 1 wherein the exact position of each said signal detection device (11) is fixed and wherein said base-line of signal readout corresponds to the fixed location of said device (11).

6. A system for monitoring certain signals; said system comprising:
a plurality of devices (11), each device (11) containing at least one receiver for determining the geographical position of said device (11) based upon signals received by said at least one receiver;
memory for maintaining positions reported from each of said plurality of devices (11); and
an exception reporting system for communicating when the location of said devices (11) deviates from an anticipated location of said devices (11).

7. The system of claim 6 wherein at least some of said devices (11) are at fixed geographical positions.

8. The system of claim 6 wherein said devices (11) comprise communication devices (11) utilizing publicly available communication bands.

9. The system of claim 6 further comprising:
a processor for determining an expected next geographical position for each said device (11).

10. The system of claim 6 wherein said anticipated location is calculated based upon a fit of calculated GPS locations from said devices (11) to known landmarks within the area of said calculated GPS locations.
